# EUROPÄISCHE PATENTSCHRIFT

(11) **EP 0 462 454 B1**
(45) Veröffentlichungstag und Bekanntmachung des Hinweises auf die Patenterteilung: **08.12.1993**
(21) Anmeldenummer: 91109249.2
(22) Anmeldetag: 06.06.1991
(51) Int. Cl.: F16L 17/02

(54) **Rohrkupplung**
Pipe coupling
Raccord pour tuyaux

(30) Priorität: 18.06.1990 CH 2025/90
(43) Veröffentlichungstag der Anmeldung: 27.12.1991
(73) Patentinhaber: STRAUB FEDERNFABRIK AG, CH-7323 Wangs (CH)
(72) Erfinder: Straub, Immanuel, CH-7323 Wangs (CH)
(74) Vertreter: Patentanwälte Schaad, Balass, Menzl & Partner AG

(56) Entgegenhaltungen:
- DE-A- 2 428 101
- FR-A- 913 114
- GB-A- 2 103 272
- US-A- 3 572 773

## Beschreibung

Die Erfindung betrifft eine Rohrkupplung gemäss dem Oberbegriff des Anspruches 1.

Rohrkupplungen dieser Art -wie sie beispielsweise aus der DE-C- 24 28 101 bekanntgeworden sind- haben die Rohrverbindungstechnik revolutioniert. Einerseits ergibt sich nämlich aus dem Umstand, dass die Dichtlippen vor der Montage in bezug auf den Nenndurchmesser der zu verbindenen Rohre Uebermass aufweisen, die Möglichkeit, die Kupplungen auf die Rohre aufzuschieben und sie mit diesen zusammen zu verlegen, wobei die Rohre einfach aneinandergereiht und die Kupplungen dann über die Stossfugen geschoben werden können. Andererseits führt das im Umfangssinne erfolgende Stauchen der Lippendichtung durch das verengungsfähige Gehäuse dazu, dass die radiale Dicke der Manschette zunimmt, so dass die Manschette nicht nur durch das Gehäuse gegen die Rohrwandung gepresst wird, sondern selbst das Bestreben hat, sich an die Rohroberfläche anzuschmiegen. Daraus ergibt sich ein Dichtvermögen, das auch bei rauher oder unregelmässiger Rohroberfläche nichts zu wünschen übrig lässt, zudem noch auf die Dauer erhalten bleibt.

Aufgabe der vorliegenden Erfindung ist die Ausgestaltung der bekannten Rohrkupplung derart, dass die Verengungsfähigkeit des Gehäuses zur Steigerung der Unempfindlichkeit hinsichtlich dilatationsbedingter Veränderungen, zumal bei druckloser Kupplung, ausgenutzt wird.

Diese Aufgabe wird durch die Merkmale des kennzeichnenden Teiles des Anspruches 1 bereits insofern gelöst, als auch im drucklosen Zustand der Manschettensteg durch die Einlage gegen den zylindrischen Mantel des Kupplungsgehäuses gedrückt wird, so dass er sich nicht nach innen auswölben kann, wenn die abgedichteten Rohre zufolge Dilatation in die Kupplung hineinwachsen und sie die Tendenz haben, die sie eng umschlingenden Bereiche der Manschette mitzunehmen. Besonders vorteilhaft wirkt sich in diesem Zusammenhang aus, wenn gemäss einem der abhängigen Ansprüche der im montierten Zustand der Kupplung zwischen den radialen Endwänden des Kupplungsgehäuses und der Rohrwandung verbleibende Ringspalt durch einen im Umfangssinne stauchbaren Gleitring verschlossen ist: Dank dieser Massnahme kann die Wandung der Manschette im Wurzelbereich zwischen Manschettensteg und Dichtlippen ohne versteifende Verstärkung ausgeführt werden, wobei auch die entsprechend erhöhte Walkfähigkeit der Manschette im Wurzelbereich der erwähnten Tendenz zu Verformung des Steges entgegenwirkt, bzw. umgekehrt dafür sorgt, dass die Versteifung des Manschettensteges durch die Einlage nicht zu einer abrieberzeugenden Relativbewegung zwischen den dichtenden und abzudichtenden Flächen führt.

Weitere vorteilhafte Ausbildungen des Erfindungsgegenstandes ergeben sich aus den übrigen abhängigen Ansprüchen.

Die Erfindung wird anhand der beiliegenden Zeichnungen näher erläutert; es zeigen
- Figur 1: in perspektivischer Darstellung eine vormontierte Rohrkupplung im noch aufgeweiteten Zustand
- Figur 2: einen teilweisen Axialschnitt nach der Linie II-II in Figur 1 in montiertem Zustand der Rohrkupplung
- Figuren 3-7: Querschnittsprofile für weitere Varianten der Einlage
- Figur 8: eine Ausführung der Einlage in Achsrichtung gesehen mit abgeflachten Endabschnitten zur Erleichterung der Positionierung der Kupplung über die Stossfuge der zu verbindenden Rohre und
- Figur 9: einen Schnitt nach der Linie IX-IX in Figur 8.

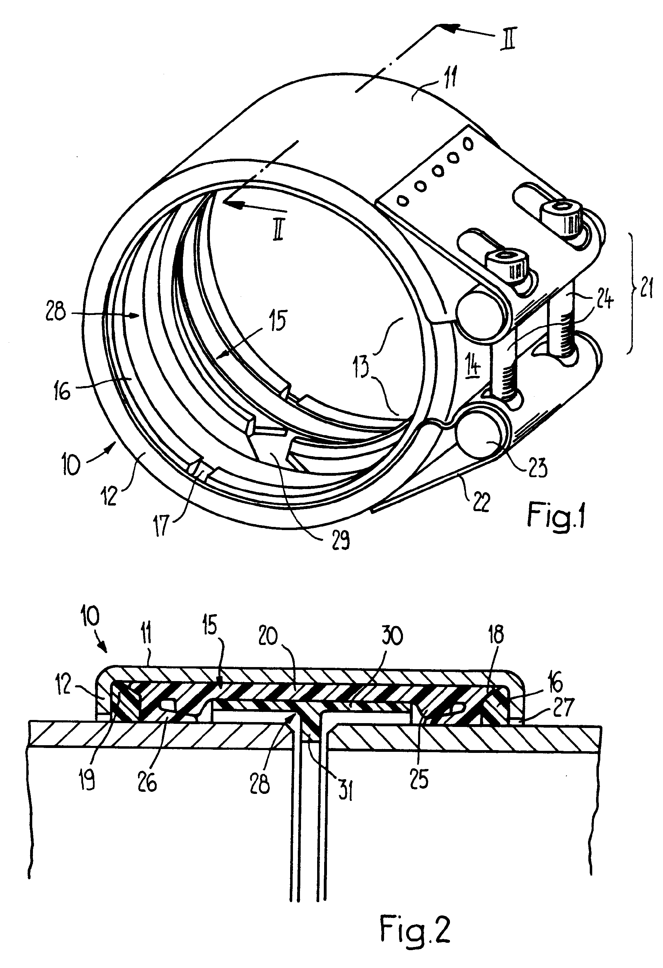

Das in Figur 1 dargestellte, der Länge nach gespaltete Gehäuse 10 besitzt einen zylindrischen Mantel 11 und einwärts umgebogene Wände 12. Das den Gehäusespalt 13 überbrückende Einlageblech ist analog ausgebildet, es umschliesst also mit dem Gehäuse einen Raum, in dem die Elastomer-Manschette ohne weiteres an ihrem Umfang und stirnseitig eingeschlossen sein kann. Die weiteren Erläuterungen erfolgen zunächst in der Annahme, dass dies der Fall ist; auf den Umstand, dass gemäss Figur 1 zwischen der Manschette 15 und den Endwänden des Gehäuses sich jeweils ein Ring 16 mit Schlitz 17 befindet, wird erst später Bezug genommen.

Das Gehäuse weist einen Verschluss 21 auf, bestehend aus Spannlaschen 22, Spannstäben 23 und Spannschrauben 24, die in Gewindebohrungen des einen Spannstabes 23 eingreifen. Durch Anziehen dieser Schrauben wird der Gehäusespalt 13 geschlossen, wobei das Einlageblech 14 immer tiefer in das Gehäuse eintaucht und das Gehäuse nach der Art einer Rohrschelle verengt wird. Dabei wird die Manschette im Umfangssinne gestaucht; auf dem Manschettensteg 20 angebrachte Wülste 25 wirken auf die Dichtlippen, die dadurch ebenfalls verengt und zur satten Auflage auf das Rohr gebracht werden. In diesem montierten Zustand der Kupplung verbleibt zwischen den Endwänden 12 des Gehäuses und der Aussenwandung der zu kuppelnden Rohre jeweils ein Ringspalt 27.

In der Manschette befindet sich eine gesamthaft mit 28 (s.a. Figur 2) bezeichnete ringförmige Einlage, die die Form eines Sprengringes mit einer V-förmigen Stossfuge 29 aufweist. Im Querschnitt weist der Sprengring die Form eines T mit einem flachen Basisteil 30 und einer nach innen vorstehenden Ringrippe 31 auf. Die Einlage besteht aus einem im Umfangssinne biegsamen Material, z.B. aus einem Kunststoff, wobei sie so dimensioniert ist, dass der Basisteil zufolge Rückbildungsvermögens des Sprengringes satt und im wesentlichen ganzflächig auf dem Manschettensteg anliegt, auch wenn das Kupplungsgehäuse sich noch im aufgeweiteten Zustand befindet. Die Ringrippe 31 hat in diesem Zustand der Kupplung eine so grosse lichte Weite, dass die Kupplung ohne weiteres auf das eine der zu kuppelnden Rohre aufgeschoben und nach dem Verlegen der Rohre über die Stossfuge derselben geschoben werden kann. Nach Zusammenziehen des Gehäuses hingegen greift die Ringrippe 31 in diese Stossfuge ein und verhindert ein Wandern der Kupplung zufolge Dilatationsbewegungen der Rohre.

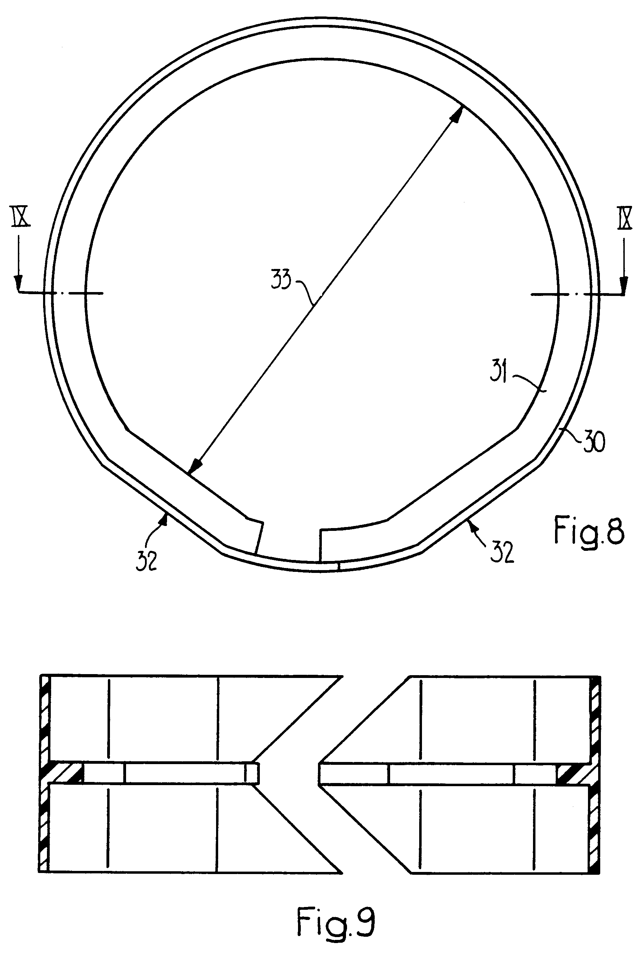

Aus Figur 8 ist ersichtlich, dass die Endabschnitte der Einlage bei 32 einschliesslich des Basisteiles 30 und der Ringrippe 31 einen vergrösserten Krümmungsradius, nämlich eine Abflachung aufweisen. Im Bereiche dieser Abflachungen ist die durch den Doppelpfeil 33 veranschaulichte lichte Weite der Ringrippe kleiner als der Aussendurchmesser der zu verbindenden Rohre. Dennoch lässt sich die Kupplung leicht auf das eine Rohr aufstecken, da die Ringrippe 31 bzw. der Basisteil 30 im Bereiche der Abflachungen 32 nachgeben und sich in radialer Richtung zurückdrängen lassen. Wenn nach dem Verlegen der Rohre die Kupplung über die Stossfuge zwischen den Rohrenden geschoben wird, schnappen die zurückgedrängten Abschnitte der Ringrippe 31 in die Stossfuge ein, wobei die Kupplung ohne weiteres in bezug auf die Stossfuge zentriert wird. Es ist natürlich nicht notwendig, die Ringrippe 31 kontinuierlich auszubilden, sie könnte Unterbrechungen aufweisen und durch eine Reihe von Klötzchen oder Stiften gebildet sein.

Aus dem Vorstehenden ist ohne weiteres erkennbar, dass der praktisch ganzflächig auf dem Manschettensteg aufliegende Basisteil diesen auch ohne Innendruck des abzudichtenden Mediums satt in Auflage mit dem zylindrischen Mantel 11 des Gehäuses 10 hält, so dass dilatationsbedingt in die Kupplung hineinwachsende Rohre ein Abheben des Manschettensteges 20 vom Gehäusemantel 11 nicht verursachen, die am Dichten teilnehmenden Bereiche der Manschette sich also nicht nach innen schieben können; die Randkanten des Basisteiles 30 müssen dabei nicht unbedingt mit den Wülsten 25 zusammenwirkende Anschläge bilden.

In diesem Zusammenhang sind auch die beiden Sprengringe 16 (sie werden später entsprechend ihrer näher erläuterten Funktion als Gleitringe bezeichnet) zu beachten, indem sie sich -wie Figur 2 erkennen lässt- beim Anziehen des Gehäuses ebenfalls verengen und im montierten Zustand der Kupplung den Ringspalt 27 von innen abschliessen. Dabei ist dafür gesorgt, dass der Schlitz 17 der Sprengringe sich in der Endphase der Montage schliesst und die Sprengringe durch Stauchen in Berührung mit der Aussenwandung der zu kuppelnden Rohre gebracht werden. Es entsteht dabei ein Gleitsitz zwischen den Sprengringen und der Rohrwandung, folglich können die Sprengringe auch als Gleitringe bezeichnet werden. Dank dieser Massnahme kann die Wandung der Manschette im Wurzelbereich, d.h. in dem die Dichtlippen 26 mit dem Manschettensteg 20 verbindenden Bereich ohne axiale Verdickung, also relativ dünn ausgeführt werden. Dies erhöht die Walkfähigkeit der Manschette im Wurzelbereich, so dass trotz Versteifung des Manschettensteges es nicht zu einer reibenden Relativbewegung zwischen den Dichtflächen der Dichtlippen und der Rohrwandung kommt. Die Steigerung der Dilatationsfähigkeit der Kupplung durch die erläuterten Massnahmen paart sich also mit der Erhöhung der Lebensdauer.

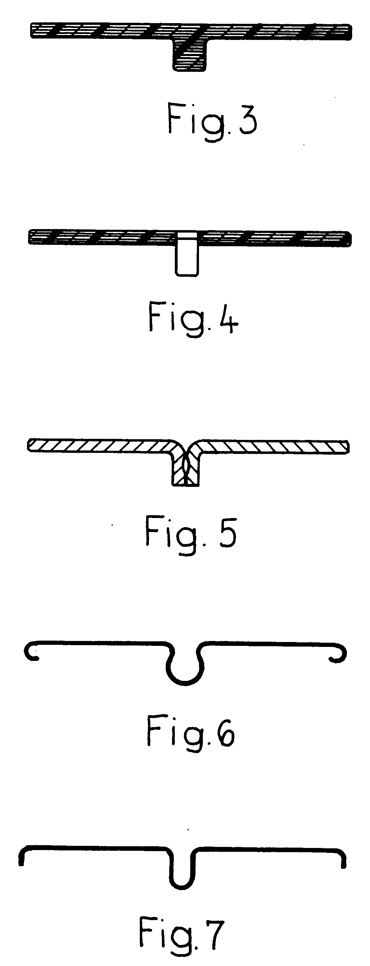

Die Querschnittsprofile gemäss den Figuren 3-7 sind ohne weitere Erläuterungen verständlich, sie sollen die vielfältigen Möglichkeiten und Materialien andeuten, die in bezug auf die Gestaltung der Einlage zur Verfügung stehen.

Diese sind aus Materialen gefertigt, die die in Anspruch 1 angegebenen Eigenschafen gewährleisten.

Hingegen ist noch auf den trapezförmigen Querschnitt der Gleitringe 16 hinzuweisen; dadurch entsteht zwischen dem Aussenumfang der Gleitringe und dem zylindrischen Mantel 11 des Gehäuses jeweils ein sich nach aussen hin keilförmig verengender Ringraum 18, in den je ein stirnseitiger Ringfortsatz 19 der Manschette eingreift. Hierbei wird der Gleitsitz zwischen den Gleitringen 16 und der Rohrwandung aufrechterhalten, einmal zufolge Stauchens der Manschette und mithin auch der Ringfortsätze bei der Montage der Kupplung, sodann aber auch unter der Wirkung des Mediumsdruckes, der die Gleitringe 16 in axialer Richtung voll gegen die Endwandungen 12 des Kupplungsgehäuses drückt, in radialer Richtung hingegen mit einer Teilkraft dem Abreissen des Gleitsitzes auch bei Dehnung des Gehäuses entgegenwirkt.

## Patentansprüche

1. Rohrkupplung mit einer im Querschnitt etwa C-förmigen Elastomer-Dichtungsmanschette (15), deren sich gegeneinander erstreckende Dichtlippen (26) mittels je eines an der Manschette (15) angeformten Ringwulstes (25) auf dem Manschettensteg (20) abgestützt sind und die von einem durch einen Verschluss (21) mit Spannschrauben (24) verengbaren Gehäuse (10) mit radialen Endwänden (12) und von einem zwischen Manschette (15) und Gehäuse (10) eingelegten, den Längsspalt (13) des Gehäuses (10) überbrückenden Einlageblech (14) umschlossen ist, wobei die Dichtlippen (26) der Manschette (15) vor dem Zusammenziehen des Gehäuses (10) in bezug auf den Nenndurchmesser der zu kuppelnden Rohre Uebermass aufweisen und beim Zusammenziehen des Gehäuses (10) durch Druckwirkung der Ringwülste (25) im Umfangssinne stauchbar und satt an die Rohrwandung anpressbar sind, gekennzeichnet durch eine ringförmige, in Umfangsrichtung elastisch biegsame und verengungsfähige, in Achsrichtung hingegen biegesteife Einlage (28), die sich unter eigenem Rückbildungsvermögen mit einem Basisteil (30) an dem Manschettensteg (20) im wesentlichen ganzflächig abstützt.

2. Rohrkupplung nach Anspruch 1, dadurch gekennzeichnet, dass die Einlage (28) als Sprengring ausgebildet ist.

3. Rohrkupplung nach Anspruch 2, dadurch gekennzeichnet, dass die Einlage (28) eine V-förmige Stossfuge (29) aufweist.

4. Rohrkupplung nach einem der Ansprüche 1-3, dadurch gekennzeichnet, dass die Einlage (28) eine radial nach innen gerichtete kontinuierliche oder unterbrochene Ringrippe (31) aufweist, deren lichte Weite im unverengten Zustand der Kupplung grösser und im verengten Zustand kleiner ist als der Nenndurchmesser der zu kuppelnden Rohre.

5. Rohrkupplung nach Anspruch 4, dadurch gekennzeichnet, dass die Einlage (28) mindestens einen Umfangsabschnitt (32, Fig.8), vorzugsweise Endabschnitt aufweist, innerhalb dessen der Krümmungsradius des Basisteiles (30) und der Ringrippe (31) vergrössert und die lichte Weite der Ringrippe (31) entsprechend verkleinert ist.

6. Rohrkupplung nach einem der Ansprüche 1-5, dadurch gekennzeichnet, dass der im montierten Zustand der Kupplung zwischen den radialen Endwänden (12) des Kupplungsgehäuses (10) und der Rohrwandung verbleibende Ringspalt (27) je durch einen im Umfangssinne stauchbaren Gleitring (16) verschlossen ist, der an der betreffenden Endwand (12) anliegend durch den zylindrischen Mantel (11) des Kupplungsgehäuses (10) auf dem Rohr zur Auflage bringbar ist und mit demselben einen Gleitsitz bildet.

7. Rohrkupplung nach Anspruch 6, dadurch gekennzeichnet, dass die Manschette (15) an ihren Stirnseiten je einen den Gleitring (16) satt umgreifenden Fortsatz (19) aufweist.

8. Rohrkupplung nach Anspruch 7, dadurch gekennzeichnet, dass der Fortsatz (19) einen sich nach aussen verjüngenden Querschnitt aufweist und der Gleitring (16) mit dem Gehäuse (10-11) einen Ringraum (18) von entsprechendem Profil bildet.

9. Rohrkupplung nach einem der Ansprüche 6-8, dadurch gekennzeichnet, dass der Gleitring (16) und/oder die Einlage (28) aus einem hoch-molekularen natürlichen oder künstlichen stauchbaren Stoff besteht, vorzugsweise aus Polyäthylen.

10. Rohrkupplung nach Anspruch 9, dadurch gekennzeichnet, dass der Gleitring (16) so als Sprengring ausgebildet ist. dass sein Schlitz (17) beim Zusammenziehen des Gehäuses (10) unmittelbar vor der Endstellung schliesst.

## Claims

1. Pipe coupling having a cross-sectionally approximately C-shaped elastomer gasket (15), the sealing lips (26) of which, extending towards each other, are supported on the gasket web (20) by means of in each case an annular bead (25) moulded on the gasket (15), and which is enclosed by a housing (10), having radial end walls (12) and capable of being constricted by a closure (21) with tensioning screws (24), and by a metal insert sheet (14), inserted between gasket (15) and housing (10) and bridging the longitudinal gap (13) of the housing (10), in which arrangement, before the drawing together of the housing (10), the sealing lips (26) of the gasket (15) are overdimensioned with respect to the nominal diameter of the pipes to be coupled and, upon drawing together of the housing (10), can be compressed circumferentially by pressure exerted by the annular beads (25) and can be pressed snugly against the pipe wall, characterised by an annular insert (28), which is elastically flexible and constrictable in the circumferential direction, but flexurally rigid in the axial direction and which is supported under its own resilience by a base part (30) on the gasket web (20) essentially over the full surface area.

2. Pipe coupling according to Claim 1, characterised in that the insert (28) is designed as a snap ring.

3. Pipe coupling according to Claim 2, characterised in that the insert (28) has a V-shaped butt joint (29).

4. Pipe coupling according to one of Claims 1-3, characterised in that the insert (28) has a radially inwardly directed continuous or interrupted annular rib (31), the clear width of which is greater in the unconstricted state of the coupling and is less in the constricted state than the nominal diameter of the pipes to be coupled.

5. Pipe coupling according to Claim 4, characterised in that the insert (28) has at least one circumferential section (32, Fig. 8), preferably end section, within which the radius of curvature of the base part (30) and of the annular rib (31) is enlarged and the clear width of the annular rib (31) is correspondingly reduced.

6. Pipe coupling according to one of Claims 1-5, characterised in that the annular gap (27) remaining between the radial end walls (12) of the coupling housing (10) and the pipe wall in the fitted state of the coupling is closed in each case by a circumferentially compressible sliding ring (16), which while bearing against the end wall (12) concerned can be brought to rest by the cylindrical casing (11) of the coupling housing (10) on the pipe and forms a sliding fit with the same.

7. Pipe coupling according to Claim 6, characterised in that, the gasket (15) has on its end faces in each case a continuation (19) snugly embracing the sliding ring (16).

8. Pipe coupling according to Claim 7, characterised in that the continuation (19) has an outwardly tapering cross-section and the sliding ring (16) forms with the housing (10-11) an annular space (18) of corresponding profile.

9. Pipe coupling according to one of Claims 6-8, characterised in that the sliding ring (16) and/or the insert (28) consist of a natural or synthetic compressible material of high molecular weight, preferably of polyethylene.

10. Pipe coupling according to Claim 9, characterised in that the sliding ring (16) is designed as a snap ring such that, upon drawing together of the housing (10), its slit (17) closes immediately before the end position.

## Revendications

1. Raccord pour tuyaux, comprenant un manchon d'étanchéité en élastomère (15) qui présente une section transversale sensiblement en forme de C et dont les lèvres d'étanchéité (26) qui s'étendent l'une vers l'autre sont chacune soutenues sur la barrette de manchon (20) par un bourrelet annulaire (25) conformé sur le manchon (15), et qui est entouré par un carter (10) avec des parois terminales (12) radiales, pouvant être rétréci au moyen d'une fermeture (21) avec des boulons de serrage (24) et par une tôle de revêtement (14) insérée entre le manchon (15) et le carter (10) et recouvrant la fente longitudinale (13) du carter (10), les lèvres d'étanchéité (26) du manchon (15) présentant avant le serrage du carter (10) une surmesure par rapport au diamètre nominal des tuyaux à raccorder et pouvant être comprimées, lors du serrage du carter (10) par l'effet de compression des bourrelets annulaires (25), dans le sens circonférentiel et appliquées à plat contre la paroi des tuyaux, **caracté****risé en ce** qu'il comprend un insert (28) annulaire élastique et rétrécissable dans le sens circonférentiel mais rigide en flexion dans le sens axial, qui sous l'effet de sa propre formation inverse, s'appuie avec un élément de base (30) sensiblement avec toute la surface sur la barrette (20) du manchon.

2. Raccord pour tuyaux selon la revendication 1, caractérisé en ce que l'insert (28) est conformé en jonc.

3. Raccord pour tuyaux selon la revendication 2, caractérisé en ce que l'insert (28) présente un joint (29) en forme de V.

4. Raccord pour tuyaux selon l'une des revendications 1 à 3, caractérisé en ce que l'insert (28) présente une nervure annulaire (31) continue ou discontinue, dirigée radialement vers l'intérieur, dont le diamètre intérieur est plus grand à l'état non rétréci du raccord et plus petit à l'état rétréci que le diamètre nominal des tuyaux à raccorder.

5. Raccord pour tuyaux selon la revendication 4, caractérisé en ce que l'insert (28) présente au moins une section circonférentielle (32, fig. 8), de préférence une section terminale, à l'intérieur de laquelle le rayon de courbure de l'élément de base (30) et de la nervure annulaire (31) est plus grand et le diamètre intérieur de ladite nervure annulaire (31) plus petit en conséquence.

6. Raccord pour tuyaux selon l'une des revendications 1 à 5, caractérisé en ce que la fente annulaire (27) subsistant à l'état monté du raccord entre les parois terminales radiales (12) du carter (10) du raccord et la paroi du tuyau est fermée respectivement par un anneau de glissement (16) compressible dans le sens circonférentiel qui, appliqué contre la paroi terminale (12) correspondante, peut être mis en contact avec le tuyau par l'enveloppe cylindrique (11) du carter (10) du raccord et forme avec ledit tuyau un ajustement glissant.

7. Raccord pour tuyaux selon la revendication 6, caractérisé en ce que le manchon (15) présente sur chacune de ses faces frontales un prolongement (19) qui entoure à plat point un anneau de glissement (16).

8. Raccord pour tuyaux selon la revendication 7, caractérisé en ce que le prolongement (19) présente une section transversale qui se rétrécit vers l'extérieur, et que l'anneau de glissement (16) forme avec le carter (10-11) un espace annulaire (18) avec un profil correspondant.

9. Raccord pour tuyaux selon l'une des revendications 6 à 8, caractérisé en ce que l'anneau de glissement (16) et/ou l'insert (28) sont constitués d'une matière naturelle ou synthétique compressible à haute densité moléculaire, de préférence de polyéthylène.

10. Raccord pour tuyaux selon la revendication 9, caractérisé en ce que l'anneau de glissement (16) est conformé en jonc de telle façon que, lors du resserrage du carter (10), sa fente (17) se ferme immédiatement avant la position extrême.
